# EUROPÄISCHE PATENTSCHRIFT

(11) **EP 2 366 477 B1**
(45) Veröffentlichungstag und Bekanntmachung des Hinweises auf die Patenterteilung: **22.08.2012**
(21) Anmeldenummer: 11405211.1
(22) Anmeldetag: 16.02.2011
(51) Int. Cl.: B23B 29/034

(54) **Ausdrehkopf**
Boring head
Tête à aléser

(30) Priorität: 15.03.2010 CH 357102010
(43) Veröffentlichungstag der Anmeldung: 21.09.2011
(73) Patentinhaber: Heinz Kaiser AG, 8153 Rümlang (CH)
(72) Erfinder: Stadelmann, Rudolf, 9244 Niederuzwil (CH); Abderhalden, Gottlieb, 8132 Egg (CH); Stadelmann, Ralph, 8165 Schleinikon (CH)
(74) Vertreter: Detken, Andreas

(56) Entgegenhaltungen:
- EP-A1- 0 564 425
- EP-A1- 0 835 709
- EP-A2- 0 990 477
- CH-A5- 611 190
- CH-A5- 627 676
- DE-A1- 2 611 146

## Beschreibung

Die Erfindung betrifft einen Ausdrehkopf nach dem Oberbegriff des Anspruchs 1.

Ausdrehköpfe dieser Art sind im Stand der Technik seit langem bekannt. Es wird hier beispielsweise auf die EP-B-0 990 477, CH 627 676 und CH 611 190 verwiesen. Solche zweischneidigen Ausdrehköpfe eignen sich besonders für die Schruppbearbeitung von Bohrungen. Die beiden um 180° zueinander verdreht angeordneten Schneiden ermöglichen verglichen mit einschneidigen Werkzeugen eine doppelte Vorschubgeschwindigkeit. Grundsätzlich sind drei Arten von Schruppen möglich. Beim doppelt-versetzten Schruppen sind die Schneiden axial und radial versetzt. Beim rotations-symmetrischen Schruppen sind die beiden Schneiden weder axial noch radial zueinander versetzt. Dies ist die am häufigsten verwendete Einstellung. Beim Voll-Profil-Schruppen sind die beiden Schneiden im Durchmesser stark versetzt. Zum Schruppen werden an solche Ausdrehköpfe besonders hohe Anforderungen an die Stabilität gestellt. Die einzeln axial und radial verstellbaren Schneidenträger sollen somit zur Drehmomentübertragung besonders stabil am Werkzeugkörper abgestützt sein. Um die Schneiden axial zu versetzen, wurden bisher entsprechende Zwischenteile oder Stellschrauben verwendet. Durch solche Zwischenteile bzw. Stellschrauben wird der Ausdrehkopf jedoch weniger stabil, was für Schupparbeiten besonders nachteilig ist.

Die DE-A-26 11 146 offenbart einen Ausdrehkopf gemäβ dem Oberbegriff des Anspruchs 1 der zwei Schneidenträger aufweist, die mittels einer radial verlaufenden Klemmschraube gemeinsam zwischen zwei Teilen des Grundkörpers klemmbar sind. Verzahnungspaarungen bilden Führungen zwischen dem Grundkörper und den Schneidenträgern. Die Verzahnungen sind um ein Mass v/2 axial versetzt. Mittels einer Spindel sind die beiden Schneidplattenhalter miteinander verbunden und radial verstellbar.

Die EP-A-0 564 425 offenbart einen Ausdrehkopf mit zwei Schneidenträgern. Mittels einer Zwischenplatte kann der eine Schneidenträger axial gegenüber dem anderen Schneidenträger versetzt werden.

Der Erfindung liegt die Aufgabe zugrunde, einen Ausdrehkopf der genannten Art zu schaffen, mit dem die genannten Schrupparten durchführbar sind und der trotzdem sehr stabil und kostengünstig herstellbar ist.

Die Aufgabe ist bei einem gattungsgemässen Ausdrehkopf gemäss Anspruch 1 gelöst. Der erfindungsgemässe Ausdrehkopf kann ohne die Verwendung eines zusätzlichen Teils für die genannten Schrupparten verwendet werden. Um den Ausdrehkopf vom rotations-symmetrischen Schruppen auf das doppelt-versetzte Schruppen umzustellen, müssen lediglich die beiden Schneidenträger miteinander vertauscht werden. Wesentlich ist auch, dass beim erfindungsgemässen Ausdrehkopf eine Verzahnung zwischen dem Werkzeugkörper und den Schneidenträgern möglich ist. Eine solche Verzahnung ist im Stand der Technik an sich beispielsweise aus der CH 611 190 bekannt. Ein Schruppen mit axialer Versetzung der Schneiden war bisher mit einer solchen Verzahnung jedoch nicht möglich. Die Erfindung lässt sich aber auch besonders einfach bei einem Ausdrehkopf realisieren, bei dem die beiden Schneidenträger auf einen länglichen brückenförrnigen Werkzeugkörper angeordnet sind. Ein brückenförmiger Ausdrehkopf ist im Stand der Technik durch die CN 2009-262307 bekannt geworden. Dieser Ausdrehkopf ermöglicht jedoch kein doppelt-versetztes Schruppen.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: eine räumliche Ansicht eines erfindungsgemässen Ausdrehkopfes,
- Fig. 2: eine Seitenansicht des Ausdrehkopfes nach Fig. 1, wobei die beiden Schneidenhalter zum symmetrischen Schruppen angeordnet sind,
- Fig. 3: eine Ansicht gemäss Fig. 2, wobei die beiden Schneidenhalter jedoch zum axial versetzten Schruppen angeordnet sind,
- Fig. 4: eine räumliche Ansicht des erfindungsgemässen Ausdrehkopfes, wobei einzelne Teile aus zeichnerischen Gründen auseinandergezogen sind,
- Fig. 5 und 6: Seitenansichten der beiden Schneidenhalter, wobei die Zahnung gemäss Varianten unterschiedlich ist,
- Fig. 7 und 8: Seitenansichten des Werkzeugträgers, wobei die Zahnung der Spannfläche unterschiedlich ist,
- Fig. 9: eine räumliche Ansicht eines erfindungsgemässen Ausdrehkopfes nach einer Variante,
- Fig. 10: eine Seitenansicht des Ausdrehkopfes nach Fig. 9,

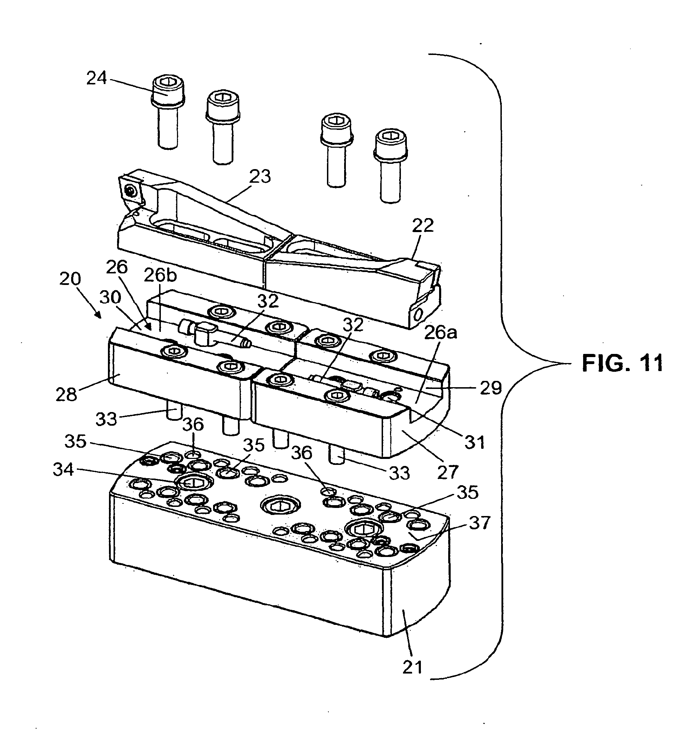

- Fig. 11: eine räumliche Ansicht des Ausdrehkopfes nach Fig. 9, wobei aus zeichnerischen Gründen einzelne Teile auseinandergezogen sind und
- Fig. 12: eine Ansicht gemäss Fig. 10, wobei jedoch Zwischenteile im Schnitt gezeichnet sind.

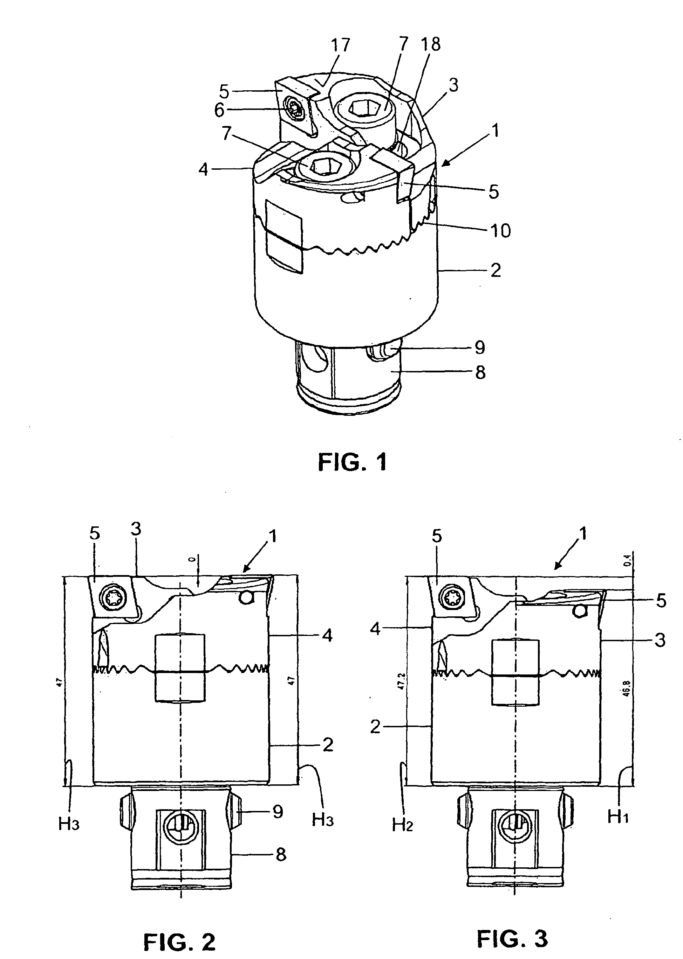

Der in Fig. 1 gezeigte Ausdrehkopf besitzt einen Werkzeugkörper 2, der an einer Unterseite einen Befestigungszapfen 8 aufweist, mit dem der Ausdrehkopf 1 in an sich bekannter Weise an einem Antrieb befestigbar ist. Ein quer durch den Befestigungszapfen 8 laufender Bolzen 9 dient zur Drehsicherung. Auf dem Werkzeugkörper 2 sind zwei Schneidenträger 3 und 4 radial verschieblich gelagert. An den beiden Schneidenträgern 3 und 4 ist jeweils mit einer Befestigungsschraube 6 eine Schneidplatte 5 befestigt, die jeweils axial eine Stirnseite 17 überragt. Die Schneidplatten 5 können als Wendeplatten ausgebildet sein.

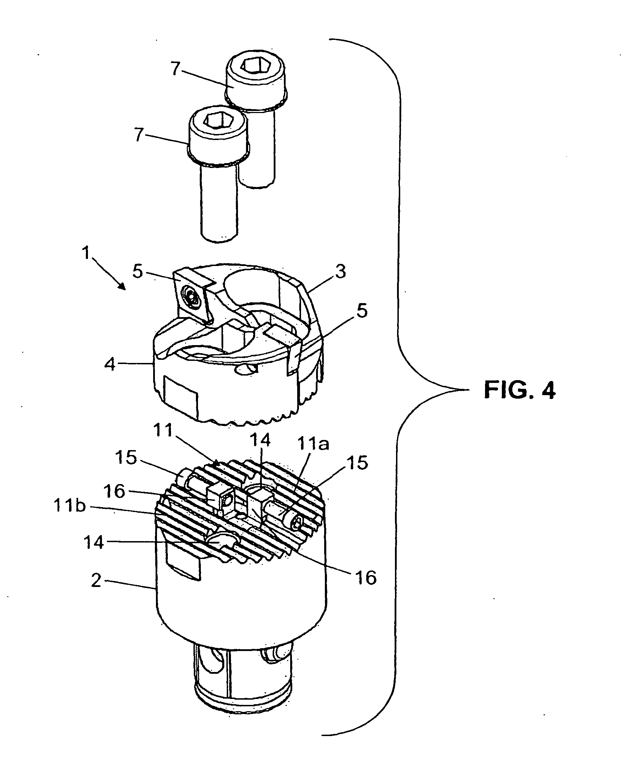

Die beiden Schneidenträger 3 und 4 sind jeweils mit einer Spannschraube 7 auf dem Werkzeugkörper 2 befestigt. Die Spannschrauben 7 durchgreifen jeweils ein Langloch 18 und 25 und sind jeweils in eine hier nicht gezeigte Gewindebohrung des Werkzeugsträgers 2 eingesetzt. Sind die Spannschrauben 7 gelöst, so können die beiden Schneidenträger 3 und 4 jeweils unabhängig voneinander radial verschoben werden, so weit dies die Langlöcher 18 zulassen. Die vorgesehenen Positionen werden jeweils durch einen Anschlag definiert, der gemäss Fig. 4 jeweils durch eine Einstellschraube 15 gebildet wird. Diese Einstellschrauben 15 sind jeweils um 180° verdreht in einem Träger 16 gelagert. An den Unterseiten der Schneidenträger 3 und 4 sind für diese Einstellschrauben 15 und Träger 16 entsprechende hier nicht gezeigte Ausnehmungen vorgesehen. Die beiden Schneidenträger 3 und 4 sind mit dem Werkzeugkörper 2 über eine Verzahnung 10 miteinander verbunden. Diese Verzahnung umfasst eine Zahnung 12 einer Spannfläche 11 des Werkzeugkörpers 2 und Zahnungen 13 der beiden Schneidenträger 3 und 4. Die Zahnungen 12 und 13 sind korrespondierend zueinander ausgebildet, so dass diese entsprechend ineinandergreifen.

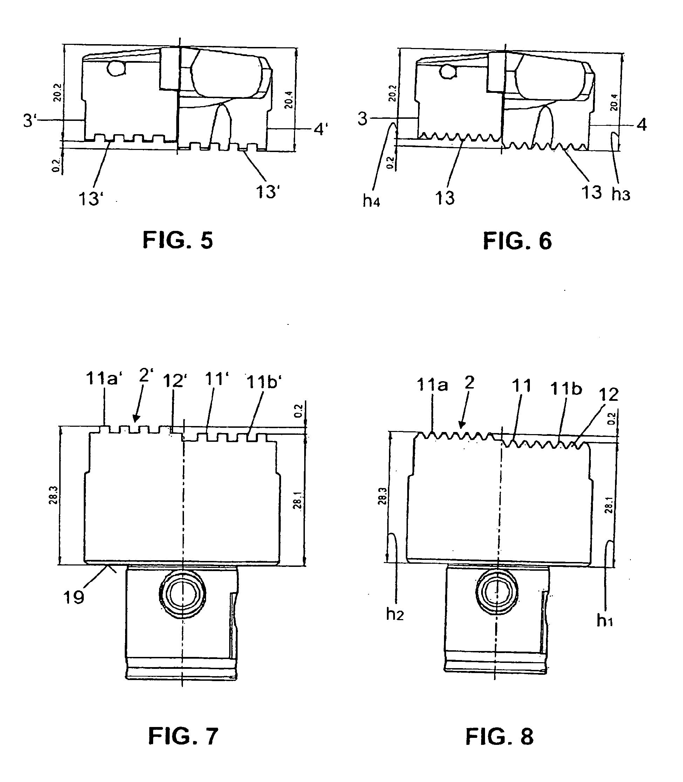

Die Zahnung 12 der Spannfläche 11 weist zwei Teilspannflächen 11a und 11b auf, die halbkreisförmig ausgebildet und in axialer Richtung zueinander versetzt sind. In den Figuren 5 bis 8 ist dieser axiale Versatz aus zeichnerischen Gründen überhöht gezeichnet. Das Mass dieser Versetzung ist in Wirklichkeit wesentlich kleiner, beispielsweise 0.2 mm. Gemäss Fig. 8 sind somit zwei Höhen h1 und h2 vorgesehen, die jeweils den Abstand der Teilspannflächen 11a und 11b bezüglich einer Spannfläche 19 des Werkzeugkörpers bedeuten. Die Höhe h1 beträgt beispielsweise 28,1 mm und die Höhe h2 28,3 mm. Die beiden Schneidenträger 3 und 4 sind gemäss Fig. 6 in axialer Richtung unterschiedlich hoch. Diese Höhen sind mit h3 und h4 bezeichnet. Der Unterschied der Höhen h3 und h4 ist auch hier überhöht gezeichnet und beträgt beispielsweise 0.2 mm. Die Höhe h3 beträgt hier 20.4 mm und die Höhe h4 20.2 mm. Die Differenz zwischen h1 und h2 ist somit gleich der Differenz zwischen h3 und h4. Die Höhen h3 und h4 beziehen sich jeweils auf den Abstand zwischen der Zahnung 13 und der Schneidkante der Schneidplatte 5.

Der in den Figuren 5 und 7 gezeigte Ausdrehkopf 1' unterscheidet sich bezüglich des Ausdrehkopfes 1 lediglich bezüglich der Ausgestaltung der Spannfläche 11 bzw. der beiden Teilspannflächen 11a' und 11b' und der Zahnungen 13' der beiden Schneidenträger 3' und 4'. Die am Werkzeugträger 2' vorgesehene Zahnung 12' ist wie ersichtlich im Querschnitt recht eckig und korrespondierend zur Zahnung 13' ausgebildet. Die genannten axialen Höhenunterschiede sind auch bei diesem Ausdrehkopf 1' vorgesehen. Die Zahnungen können somit unterschiedlich ausgebildet sein.

Die Schneidenträger 3 und 4 bzw. 3' und 4' sind mit Ausnahme der genannten Höhenunterschiede identisch ausgebildet. Sie können somit gegeneinander ausgewechselt werden. Aufgrund der genannten Höhenunterschiede sind die Schneidplatten 5 gemäss Fig. 2 rotations-symmetrisch oder gemäss Fig. 3 zumindest axial versetzt angeordnet. Bei der Anordnung gemäss Fig. 3 ist die Schneide 5 des Schneidenträgers 3 in einer Höhe H1 und die Schneidplatte 5 des Schneidenträgers 4 in einer Höhe H2 angeordnet. Die Höhendifferenz ist hier die Summe der Höhendifferenz zwischen den Teilspannflächen 11a und 11b und der Höhendifferenz der beiden Schneidenträger 3 und 4. Diese Differenz beträgt beim gezeigten Beispiel somit 0.4 mm. Entsprechendes gilt für den Ausdrehkopf gemäss den Figuren 5 und 7. Relevant sind auch hier die Schneidkanten der beiden Schneidplatten 5.

Mit dem Ausdrehkopf 1 gemäss Fig. 2 ist ein rotations-symmetrisches Schruppen möglich. Dieses ist besonders geeignet für die Zerspahnung kleinerer bis mittlerer Materialzugaben, beispielsweise 10% vom Enddurchmesser. Bei hohen Schnittgeschwindigkeiten sind hier grosse Vorschübe möglich. Mit radial vergleichsweise stark versetzter Schneidenanordnung ist hier auch ein sogenanntes Vollprofilschruppen möglich.

Bei der Schneidenänordnung gemäss Fig. 3 ist ein versetztes und insbesondere doppelt-versetztes Schruppen möglich. In der Regel sind hier die Schneidplatten 5 sowohl im Durchmesser als auch in der Höhe bzw. axial versetzt. Dies ermöglicht insbesondere die Zerspannung der doppelten Materialzugabe bei halbierten Vorschubwerten und ausgezeichneter Spannkontrolle. Die Materialzugabe beträgt hier beispielsweise 20% vom Enddurchmesser. Um den Ausdrehkopf 1 zwischen den beiden in Fig. 2 und 3 gezeigten Einstellungen umzurüsten, müssen lediglich die Spannschrauben 7 aus dem Werkzeugträger 2 herausgedreht, die beiden Schneidenträger 3 und 4 ausgetauscht und die beiden Spannschrauben 7 wieder eingesetzt und angezogen werden. Die Verzahnung 10 ist bezüglich der Stabilität vorteilhaft, jedoch nicht zwingend. Die Verzahnung 10 kann somit auch durch ebene Flächen ersetzt werden.

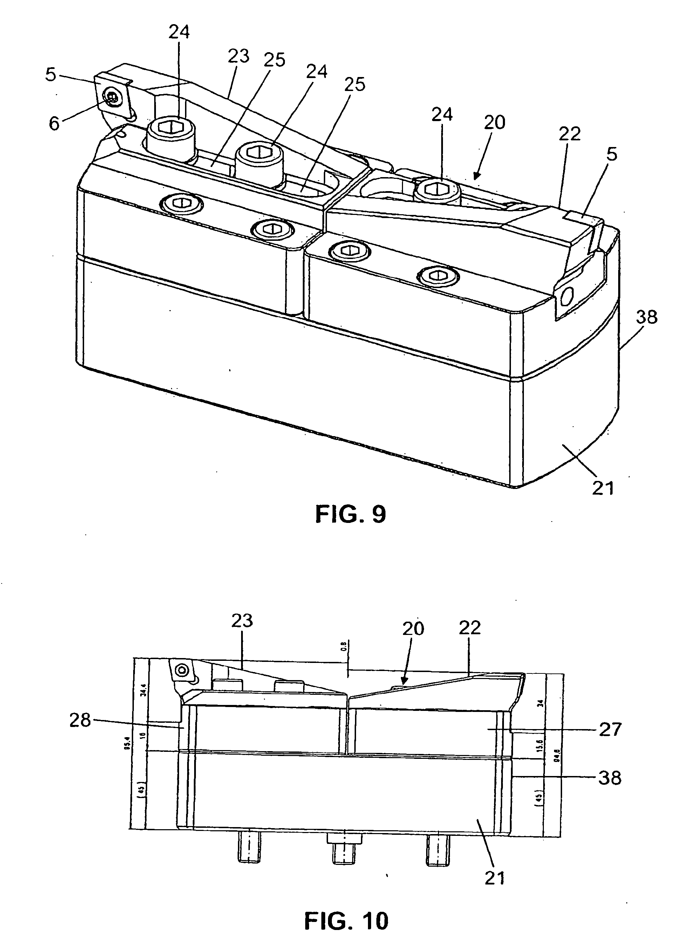

Der in Fig. 9 gezeigte Ausdrehkopf 20 eignet sich für grössere Durchmesser von beispielsweise 200 bis 600 mm. Er eignet sich ebenfalls für die oben genannten Schrupparten. Der Ausdrehkopf 1 besitzt eine längliche Brückesohle 21, auf der zwei Zwischenteile 27 und 28 befestigt sind. Die beiden Zwischenteile 27 und 28 werden mit Befestigungsschrauben 33 gegen eine Oberseite 37 der Sole 21 gespannt. Hierzu sind Befestigungsschrauben 33 sowie in der Sole 21 Gewindebohrungen 36 vorgesehen. An den Unterseiten der Zwischenteile 27 und 28 sind zudem hier nicht gezeigte Zapfen angeordnet, die in Bohrungen 35 der Sole 21 eingreifen. Die Gewindebohrungen 36 und die Bohrungen 35 sind so angeordnet, dass sie ein Raster für unterschiedliche Durchmesserpositionen bilden. Die beiden Zwischenteile 27 und 28 können gemäss Fig. 9 im Wesentlichen ohne Zwischenraum oder auch im Abstand zueinander angeordnet werden, so dass ein grösserer Durchmesser bearbeitet werden kann. Die genannten Zapfen ermöglichen eine hinreichende Stabilität auch beim Grössendurchmesser. Die Sole 21 und die beiden Zwischenteile 27 und 28 bilden einen Werkzeugkörper.

Die beiden Zwischenteile 27 und 28 besitzen jeweils oberseitig eine Nut 29 bzw. 30, die miteinander fluchten und die zur Lagerung eines Schneidenträgers 22 bzw. 23 vorgesehen sind. Innerhalb der Nuten 20 und 30 sind jeweils Einstellschrauben 32 als radiale Anschläge für Schneidenträger 22 und 23 angeordnet. Diese Schneidenträger 22 und 23 besitzen jeweils zwei Langlöcher 25, in welche Spannschrauben 24 einsetzbar sind, die in Gewindebohrungen 31 einschraubbar sind um die Schneidenträger 22 und 23 im Zwischenteil 27 bzw. 28 festzulegen. Sind die Spannschrauben 24 gelöst, so können die beiden Schneidenträger 22 und 23 jeweils unabhängig voneinander entsprechend den Langlöchern 25 radial verstellt werden. Die vorgesehenen Positionen sind durch die Einstellschrauben 32 definiert.

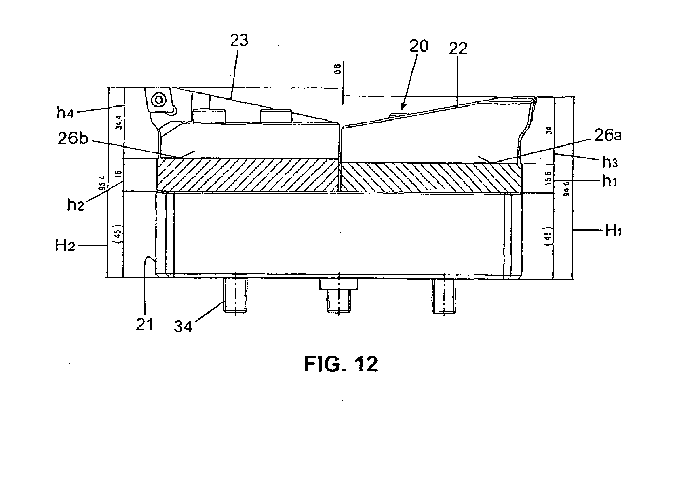

Wie insbesondere die Fig. 12 zeigt, besitzen die Zwischenteile 27 und 28 eine Teilspannfläche 26a bzw. 26b, gegen welche der Schneidenträger 22 bzw. 23 spannbar ist. Diese Teilspannflächen 26a und 26b sind gemäss Fig. 12 bezüglich der Oberseite 37 der Sole 21 unterschiedlich hoch. So besitzt die Teilspannfläche 26a die Höhe h1 und die Teilspannfläche 26b die Höhe h2. Der Höhenunterschied beträgt auch in diesem Fall 0.2 mm. In der Zeichnung 12 ist dieser Höhenunterschied aus zeichnerischen Gründen überhöht. Die Höhe h1 beträgt im gezeigten Ausführungsbeispiel 15, 6 mm und die Höhe h2 16 mm.

Die beiden Schneidenträger 22 und 23 sind ebenfalls unterschiedlich hoch. So beträgt die in Fig. 12 gezeigte Höhe h3 34 mm und die Höhe h4 34,4 mm. Bei der in Fig. 12 gezeigten Anordnung, welche derjenigen gemäss Fig. 10 entspricht, ist die Schneide des Schneidenträgers 23 somit bezüglich der Schneide 5 des Schneidenträgers 22 um 0.8 mm versetzt. Werden die beiden Schneidenträger 22 und 23 gegeneinander ausgetauscht, so ist der genannte axiale Versatz 0. Bei dieser Schneidenanordnung ist somit ein rotationssymmetrisches Schruppen oder ein Vollprofilschruppen möglich. Bei der Schneidenanordnung gemäss den Figuren 10 und 12 ist hingegen das versetzte Schruppen möglich. Die Schneiden können hierbei auch radial versetzt sein. Der Ausdrehkopf 1 ermöglicht somit ebenfalls die oben genannten Schrupparten. Eine Umstellung der Schneidenanordnung ist hier ebenfalls sehr einfach möglich. Auch bei vergleichsweise grossen Durchmessern ist eine hohe Stabilität gewährleistet. Der Ausdrehkopf 1 kann in an sich bekannter Weise an einem Antrieb befestigt werden. Hierzu sind drei Befestigungsschrauben 34 vorgesehen, welche die Sole 21 durchgreifen.

### BEZUGSZEICHENLISTE

- 1: Ausdrehkopf
- 2: Werkzeugkörper
- 3: Schneidenträger
- 4: Schneidenträger
- 5: Schneidplatte
- 6: Befestigungsschraube
- 7: Spannschraube
- 8: Befestigungszapfen
- 9: Bolzen
- 10: Verzahnung
- 11: Spannfläche
- 11a: Teilspannfläche
- 11b: Teilspannfläche
- 12: Zahnung
- 13: Zahnung
- 14: Bohrung
- 15: Einstellschraube
- 16: Träger
- 17: Stirnseite
- 18: Langloch
- 19: Spannfläche
- 20: Ausdrehkopf
- 21: Brücke
- 22: Schneidenträger
- 23: Schneidenträger
- 24: Spannschraube
- 25: Langloch
- 26: Spannfläche
- 26a: Teilspannfläche
- 26b: Teilspannfläche
- 27: Zwischenteil
- 28: Zwischenteil
- 29: Nut
- 30: Nut
- 31: Bohrung
- 32: Einstellschraube
- 33: Befestigungsschraube
- 34: Befestigungsschraube
- 35: Bohrung
- 36: Gewindebohrung
- 37: Oberseite
- 38: Werkzeugkörper

## Patentansprüche

1. Ausdrehkopf mit einem Werkzeugkörper (2, 38) und zwei auf diesem lösbar befestigten und um 180° verdreht zueinander angeordneten Schneidenträgern (3, 4; 22, 23), die zur radialen Verstellung der Schneiden (5) auf einer Spannfläche (11, 26) gleitverschieblich gelagert sind, mit Spannmitteln (7, 24) zum Spannen der Schneidenträger (3, 4; 22, 23) gegen die Spannfläche (11, 26) und mit Verstellmitteln (15, 32) zum radialen Verstellen der Schneidenträger (3, 4; 22, 23), wobei die Spannfläche (11, 26) eine erste Teilspannfläche (11a, 26a) für den einen Schneidenträger (3, 4; 22, 23) und eine zweite Teilspannfläche (11b, 26b) für den anderen Schneidenträger (3, 4; 22, 23) aufweist, wobei diese beiden Teilspannflächen (11a, 11b; 26a, 26b) in axialer Richtung um ein bestimmtes Mass versetzt sind, wobei die beiden Schneidenträger (3, 4; 22, 23) bezüglich der Schneiden (5) entsprechend diesem Mass unterschiedlich hoch sind und wobei die beiden Schneidenträger (3, 4; 22, 23) wahlweise auf der ersten Teilspannfläche (11a, 26a) oder der zweiten Teilspannfläche (11b, 26b) befestigbar und radial verstellbar sind, **dadurch gekennzeichnet, dass** die beiden Schneidenträger (3, 4) jeweils mit einer Spannschraube (7, 24) auf dem Werkzeugkörper (2) befestigt und jeweils unabhängig voneinander radial verschiebbar sind.

2. Ausdrehkopf nach Anspruch 1, **dadurch gekennzeichnet, dass** der Werkzeugkörper (2) im Wesentlichen rotationsförmig und die beiden Teilspannflächen (11a;,11b) im Wesentlichen halbkreisförmig ausgebildet sind.

3. Ausdrehkopf nach Anspruch 1 oder 2, **dadurch gekennzeichnet, dass** die beiden Schneidenträger (3, 4) jeweils mit einer Verzahnung (10) auf dem Werkzeugkörper (2) radial verschieblich geführt sind.

4. Ausdrehkopf nach Anspruch 3, **dadurch gekennzeichnet, dass** die Verzahnung (10) parallel zueinander verlaufende Rillen und Rippen aufweist.

5. Ausdrehkopf nach Anspruch 1, **dadurch gekennzeichnet, dass** der Werkzeugkörper (38) länglich ausgebildet ist.

6. Ausdrehkopf nach Anspruch 5, **dadurch gekennzeichnet, dass** die beiden Schneidenträger (22, 23) jeweils länglich ausgebildet und in einer Nut (29, 30) radial verschieblich gerührt sind.

7. Ausdrehkopf nach Anspruch 5 oder 6, **dadurch gekennzeichnet, dass** der Werkzeugkörper (2) zwei Zwischenteile (27, 28) aufweist, auf denen jeweils einer der beiden Schneidenträger (22, 23) radial verschiebbar geführt ist.

8. Ausdrehkopf nach Anspruch 6 oder 7, **dadurch gekennzeichnet, dass** die beiden Zwischenteile (27, 28) gemäss einem vorbestimmten Raster in unterschiedlichen radialen Positionen auf einem Werkzeugkörper (21) befestigbar sind.

9. Ausdrehkopf nach Anspruch 8, **dadurch gekennzeichnet, dass** der Werkzeugkörper (21) gemäss diesem Raster eine Mehrzahl von Bohrungen (35, 36) aufweist.

10. Ausdrehkopf nach einem der Ansprüche 7 bis 9, **dadurch gekennzeichnet, dass** die Zwischenteile (27, 28) jeweils eine der beiden Teilspannflächen (26a, 26b) aufweisen und diese bezüglich einer Oberfläche (37) eines Teils (21) des Werkzeugkörpers unterschiedlich hoch sind.

## Claims

1. Boring head comprising a tool body (2, 38) and two cutter holders (3, 4; 22, 23) which are detachably fastened to said tool boday (2, 38), are arranged offset from one another by 180° and are mounted on a clamping surface (11, 26) in a slidable manner for radially adjusting the cutters (5), comprising clamping means (7, 10 24) for clamping the cutter holders (3, 4; 22, 23) against the clamping surface (11, 26), and comprising adjusting means (15, 32) for radially adjusting the cutter holders (3, 4; 22, 23), wherein the clamping surface (11, 26) has a first partial clamping surface (11a, 26a) for the one cutter holder (3, 4; 22, 23) and a second partial clamping surface (11b, 26b) for the other cutter holder (3, 4; 22, 23), wherein these two partial clamping surfaces (11a, 11b; 26a, 26b) are offset in the axial direction by a certain extent, wherein the two cutter holders (3, 4; 22, 23) have different heights with respect to the cutters (5) in accordance with this extent, and wherein the two cutter holders (3, 4; 22, 23) can be optionally fastened to and radially adjusted on the first partial clamping surface (11a, 26a) or the second partial clamping surface (11b, 26b), **characterized in that** the two cutter holders (3, 4) are each fastened to the tool body (2) by means of a clamping screw (7, 24) and are each radially displaceable independently of one another.

2. Boring head according to Claim 1, **characterized in that** the tool body (2) is designed in an essentially rotational form and the two partial clamping surfaces (11a; 11b) are of essentially semicircular design.

3. Boring head according to Claim 1 or 2, **characterized in that** the two cutter holders (3, 4) are each guided in a radially displaceable manner with toothing (10) on the tool body (2).

4. Boring head according to Claim 3, **characterized in that** the toothing (10) has grooves and ribs running parallel to one another.

5. Boring head according to Claim 1, **characterized in that** the tool body (38) is of elongated design.

6. Boring head according to Claim 5, **characterized in that** the two cutter holders (22, 23) are each of elongated design and are guided in a radially displaceable manner in a groove (29, 30).

7. Boring head according to Claim 5 or 6, **characterized in that** the tool body (2) has two intermediate parts (27, 28), on which one each of the two cutter holders (22, 23) is guided in a radially displaceable manner.

8. Boring head according to Claim 6 or 7, **characterized in that** the two intermediate parts (27, 28) are fastened in different radial positions on the tool body (2) according to a predetermined grid.

9. Boring head according to Claim 8, **characterized in that** the tool body (2) has a plurality of holes (35, 36) according to this grid.

10. Boring head according to one of Claims 7 to 9, **characterized in that** the intermediate parts (27, 28) each have one of the two partial clamping surfaces (26a, 26b) and the latter have different heights with respect to a surface (37) of a part (21) of the tool body.

## Revendications

1. Tête à aléser, comprenant un corps d'outil (2, 38) ainsi que deux porte-lames (3, 4 ; 22, 23) fixés de manière amovible sur celui-ci et disposés de manière tournée de 180° l'un par rapport à l'autre, lesquels porte-lames sont montés de manière déplaçable par glissement sur une surface de serrage (11, 26) pour le réglage radial des lames (5), comprenant des moyens de serrage (7, 24) pour le serrage des porte-lames (3, 4 ; 22, 23) contre la surface de serrage (11, 26), et comprenant des moyens de réglage (15, 32) pour le réglage radial des porte-lames (3, 4 ; 22, 23), la surface de serrage (11, 26) comprenant une première surface de serrage partielle (11a, 26a) pour l'un des porte-lames (3, 4 ; 22, 23) et une deuxième surface de serrage partielle (11b, 26b) pour l'autre porte-lame (3, 4 ; 22, 23), ces deux surfaces de serrage partielles (11a, 11b ; 26a, 26b) étant décalées dans la direction axiale d'une mesure déterminée, les deux porte-lames (3, 4 ; 22, 23) étant de hauteurs différentes par rapport aux lames (5) conformément à cette mesure, et les deux porte-lames (3, 4 ; 22, 23) pouvant être fixés de manière sélective sur la première surface de serrage partielle (11a, 26a) ou sur la deuxième surface de serrage partielle (11b, 26b) et pouvant être réglés radialement, **caractérisée en ce que** les deux porte-lames (3, 4) sont respectivement fixés sur le corps d'outil (2) à l'aide d'une vis de serrage (7, 24) et peuvent être respectivement déplacés radialement indépendamment l'un de l'autre.

2. Tête à aléser selon la revendication 1, **caractérisée en ce que** le corps d'outil (2) est essentiellement de révolution et les deux surfaces de serrage partielles (11a ; 11b) sont essentiellement semi-circulaires.

3. Tête à aléser selon la revendication 1 ou 2, **caractérisée en ce que** les deux porte-lames (3, 4) sont guidés respectivement de manière déplaçable radialement sur le corps d'outil (2) par une denture (10).

4. Tête à aléser selon la revendication 3, **caractérisée en ce que** la denture (10) comprend des rainures et des nervures s'étendant parallèlement les unes aux autres.

5. Tête à aléser selon la revendication 1, **caractérisée en ce que** le corps d'outil (38) est allongé.

6. Tête à aléser selon la revendication 5, **caractérisée en ce que** les deux porte-lames (22, 23) sont respectivement allongés et sont guidés de manière déplaçable radialement dans une rainure (29, 30).

7. Tête à aléser selon la revendication 5 ou 6, **caractérisée en ce que** le corps d'outil (2) comprend deux parties intermédiaires (27, 28) sur lesquelles l'un des deux porte-lames (22, 23) est respectivement guidé de manière déplaçable radialement.

8. Tête à aléser selon la revendication 6 ou 7, **caractérisée en ce que** les deux parties intermédiaires (27, 28) peuvent être fixées, conformément à un réseau prédéterminé, sur un corps d'outil (21) à des positions radiales différentes.

9. Tête à aléser selon la revendication 8, **caractérisée en ce que** le corps d'outil (21) comprend une pluralité d'alésages (35, 36) conformément à ce réseau.

10. Tête à aléser selon l'une quelconque des revendications 7 à 9, **caractérisée en ce que** les parties intermédiaires (27, 28) comprennent respectivement l'une des deux surfaces de serrage partielles (26a, 26b), et ces dernières sont de hauteurs différentes par rapport à une surface (37) d'une partie (21) du corps d'outil.
